(19) **Europäisches Patentamt / European Patent Office / Office européen des brevets**

(11) **EP 1 225 196 B1**

(12) **EUROPEAN PATENT SPECIFICATION**

(45) Date of publication and mention
of the grant of the patent:
**14.03.2007 Bulletin 2007/11**

(51) Int Cl.:
***C08J 5/18*** (2006.01)

(21) Application number: **02001273.8**

(22) Date of filing: **17.01.2002**

(54) **Biodegradable oriented film**

Bioabbaubarer orientierter Film

Film biodégradable orienté

(84) Designated Contracting States:
**AT BE CH CY DE DK ES FI FR GB GR IE IT LI LU MC NL PT SE TR**

(30) Priority: **19.01.2001 JP 2001011536**

(43) Date of publication of application:
**24.07.2002 Bulletin 2002/30**

(73) Proprietor: **TORAY INDUSTRIES, INC.**
**Tokyo 103-8666 (JP)**

(72) Inventors:
• **Ohkura, Masatoshi**
**Otsu-shi,**
**Shiga 520-2141 (JP)**
• **Sasamoto, Tai**
**Yokohama-shi,**
**Kanagawa 227-0034 (JP)**
• **Shinnumadate, Hiroshi**
**Otsu-shi,**
**Shiga 520-0842 (JP)**

(74) Representative: **Kador & Partner**
**Corneliusstrasse 15**
**80469 München (DE)**

(56) References cited:
**EP-A- 1 008 629**         **US-A- 5 849 401**
**US-A- 6 093 791**

**Description**

BACKGROUND OF THE INVENTION

FIELD OF THE INVENTION

The present invention relates to a biodegradable oriented film softened with plasticizer. More precisely, it relates to such a biodegradable oriented film which is flexible even at high temperature and is highly safe, and to a wrapping film made of it for packages.

DESCRIPTION OF THE RELATED ART

Resins such as polyethylene, polypropylene, polyethylene terephthalate, soft polyvinyl chloride and polyvinylidene chloride have heretofore been widely used for materials for films. However, these resins are not biodegradable, and when discarded in the natural environment, they have negative influences on the environment. The problem with them has been pointed out in the art. Of such resin films, those containing chlorine such as soft polyvinyl chloride and polyvinylidene chloride may release dioxins when incinerated. This is another problem with the films.

In that situation, it is necessary to develop resins not having any negative influences on the environment, and biodegradable resins are being investigated and many biodegradable polymers have been developed. However, some biodegradable polymers are not satisfactorily flexible, as compared with conventional resins, and are therefore unsuitable to wrapping applications and agricultural applications. This is still another problem with them. In particular, polylactic acid, one typical example of biodegradable resins is unsuitable for some wrapping applications and/or agricultural applications as its flexibility is very low. For example, JP-A 185381/2000 discloses a wrapping film consisting essentially of polylactic acid. However, the film disclosed is poorly flexible, and is therefore not easy to use for wrapping applications. In other words, the commercial value of the wrapping film disclosed is low.

On the other hand, a method of softening such biodegradable resins is widely known, which comprises adding a softener (plasticizer) having a relatively low molecular weight to biodegradable resins to thereby improve the flexibility of the resins, for example, as in JP 3,096,011 and JP-A 72961/2000.

Biodegradable films softened with an ordinary softener (plasticizer) are flexible just after the addition of the softener (plastisizer) thereto, but after awhile, the softener (plasticizer) often breeds out and/or vaporizes away , and, as a result, the flexibility of the films is greatly lowered and/or the transparency of the films containing the softener (plasticizer) is lowered. In addition, when the films containing such a softener (plasticizer) are used at high temperatures, their transparency is greatly lowered and their flexibility is lowered as the plasticizer scatters away and/or bleeds out. Document US 5 849 401 addresses the problem of plasticizer migration in a biodegradable film, but falls short on a number of aspects, such as whether the flexibility of the film would be maintained at high temperatures. For these reasons, the softener-containing (plasticizer-containing) films disclosed are problematic in practical use.

SUMMARY OF THE INVENTION

The present invention is to provide a flexible biodegradable film enough for practical use, more precisely, to provide a biodegradable film which keeps itself flexible in severe condition, for example, even at high temperatures. Another object of the invention is to provide a softened biodegradable film which is substantially free from appearance change and morphology change such as transparency reduction, even when stored or used for a long period of time at high temperatures.

To attain the objects as above, the invention provides a biodegradable oriented film of a biodegradable resin containing 5 to 50 % by weight of plasticizer, of which the both surfaces are coated with at least one thin layer and of which the loop stiffness change ($\Delta R$) after heat treatment at 130°C for 30 minutes is at most 20 %, and wherein the essential constituent component of the thin layer is selected from the group of polyester resins, acrylic resins, polyurethane resins, vinyl resins, epoxy resins, amide resins and mixtures thereof, and wherein the thickness of the thin layer is at most 1 $\mu$m. The film is stretched at least monoaxially. The thin layer formed on the both surfaces of the biodegradable film of the invention is preferably so designed that it is effective for preventing the plasticizer in the film from scattering away and/or bleeding out. The biodegradable oriented film of the invention is useful, for example, for wrapping films.

DESCRIPTION OF THE PREFERRED EMBODIMENTS

The biodegradable oriented film of the invention is made of a biodegradable resin that contains 5 to 50% by weight of a plasticizer, and is characterized in that its both surfaces are coated with at least one thin layer and its loop stiffness change ($\Delta R$) after heat treatment at 130°C for 30 minutes is at most 20 %, and wherein the essential component of the thin layer is selected from the group of polyester resins, acrylic resins, polyurethane resins, vinyl resins, epoxy resins, amide resins and mixtures thereof, and wherein the thickness of the thin layer is at most 1 μm.

In the invention, the type of the substance to form the thin layer and the thickness of the thin layer must be so controlled that the loop stiffness change (ΔR) of the film coated with the thin layer on its both surfaces is at most 20 % after heat treatment at 130°C for 30 minutes. If ΔR of the coated film is larger than 20 %, the film could not keep itself flexible for a long period of time when used while exposed to high temperatures, for example, for wrapping films to be heated in microwave ovens. The loop stiffness change (ΔR) of the film after heat treatment at 130°C for 30 minutes is preferably at most 10 %, more preferably at most 7 %, as the film satisfying the requirement can keep itself flexible for a longer period of time even at higher temperatures. Even more preferably, ΔR of the film is 0 %, as the film is free from flexibility change in heat treatment.

In the invention, the both surfaces of the biodegradable film are coated with at least one thin layer. If not coated with at least one thin layer on its both surfaces, the film hardly satisfy the requirement of such that the loop stiffness change (ΔR) thereof after heat treatment at 130°C for 30 minutes is not higher than 20 %. For improving the durability in point of flexibility of plasticizer-contained biodegradable films, in general, a method of increasing the affinity of the base resin for plasticizer to be added thereto is tried. In particular, for improving the durability in point of flexibility of the films that are exposed to high temperatures of 60°C or higher, or to hot water or oil, at least one thin layer to be on the both surfaces of the film is indispensable.

In the invention, the thin layer formed on the both surfaces of the biodegradable film preferably has the function of preventing the plasticizer in the film from scattering away and/or bleeding out. In the invention, the word " scattering away" means that plasticizers contained in the films migrate to the surface of the films and vaporize away to the air. In particular, the thin layer is more preferably so designed that it well prevents the plasticizer in the film from scattering away and/or bleeding out even at high temperatures.

The thin layer is not specifically defined provided that it ensures the requirement of such that the loop stiffness change (ΔR) of the film coated with it is at most 20 % after heat treatment at 130°C for 30 minutes.

The essential constituent component of the thin layer is at least one selected from polyester resins, acrylic resins, polyurethane resins, vinyl resins, epoxy resins, and amide resins. A mixture of such resins is also usable for the thin layer. More preferably, the thin layer is made of an acrylic resin and/or a vinyl resin.

In case where the film of the invention is for wrapping films, slightly adhesive character is preferred for the thin layer.

The acrylic resins for use in the inventionmaybe composed of various types of monomers to constitute their backbone structure, for example, alkyl acrylates and alkyl methacrylates. Preferably, the alkyl group in the alkyl acrylates and the alkyl methacrylates has from 1 to 25 carbon atoms. In addition, the acrylic resins for use in the invention may also be copolymers of such that the backbone structure thereof of alkyl acrylates or alkyl methacrylates are copolymerized with various types of comonomers having a crosslinking functional group.

The crosslinking functional group of the comonomers for the acrylic resins for use in the invention includes, for example, a carboxyl group, a methylol group, an acid anhydride group, a sulfonic acid group, an amido group, a methylolated amido group, an amino group, a hydroxyl group, and an epoxy group. The comonomers having such a functional group include, for example, acrylic acid, methacrylic acid, itaconic acid, maleic acid, fumaric acid, crotonic acid, vinylsulfonic acid, styrenesulfonic acid, acrylamide, methacrylamide, N-methylolacrylamide, methylolmethacrylamide, diethylaminoethyl vinyl ether, 2-aminoethyl vinyl ether, 3-aminopropyl vinyl ether, 2-aminobutyl vinyl ether, dimethylaminoethyl methacrylate, β-hydroxyethyl acrylate, β-hydroxyethyl methacrylate, polyethylene glycol monoacrylate, polyethylene glycol monomethacrylate, glycidyl acrylate, and glycidyl methacrylate. In addition to the compounds as above, the backbone monomers of the acrylic resins for use herein may be copolymerized with any of acrylonitrile, methacrylonitrile, styrene, butyl vinyl ether, vinyl acetate, vinylpyridine, vinylpyrrolidone, and vinyl-having alkoxysilanes. Esters of the comonomers are also usable herein.

The vinyl resins for use in the invention include, for example, low-density polyethylenes, ethylene-vinyl acetate copolymers, ethylene-acrylic acid copolymers, ethylene-methacrylic acid copolymers, metal salts of ethylene-acrylic acid copolymers, metal salts of ethylene-methacrylic acid copolymers, ethylene-acrylate copolymers, saponified ethylene-vinyl acetate copolymers, ethylene-vinyl alcohol copolymers, ethylene-vinyl alcohol copolymers randomly modified with an anionic sulfonic acid group or the like introduced thereinto, polyvinyl alcohols, and polystyrenes. Of those, especially preferred are ethylene-vinyl alcohol copolymers, modified ethylene-vinyl alcohol copolymers, polyvinyl alcohols, metal salts of ethylene-acrylic acid copolymers, and metal salts of ethylene-methacrylic acid copolymers.

The thickness of the thin layer to coat the film of the invention is at most 1 μm, more preferably at most 0.5 μm in order that the thin layer practically does not fail the biodegradability of the film coated with it.

The film of the invention must be stretched at least monoaxially. Ordinary non-oriented films or extruded sheets with no crystallization or orientation are unfavorable to the invention, as they cause some problems in that their flexibility lowers after a while or the plasticizer in them often scatters away and/or bleeds out owing to significant crystallization of the films when heated. To solve the problems, the film of the invention is stretched at least monoaxially to thereby increase its molecular orientation and crystallinity. Preferably, the film is stretchedbiaxially, andmorepreferably, it is thermally fixed thereafter.

The biodegradable resin for use in the invention is a thermoplastic resin, including, for example, polyhydroxycarboxylic acid polymers, polybutylene succinates and their copolymers, aliphatic polyesters such as polycaprolactones, aromatic copolyesters such as polybutylene terephthalate copolymers and polyethylene terephthalate copolymers, and cellulose acetates. For the biodegradable resin for use in the invention, especially preferred are polyhydroxycarboxylic acid polymers as they accept a large amount of plasticizer to increase their flexibility and have relatively higher melting points.

The polyhydroxycarboxylic acid polymers include polymers and copolymers of L-lactic acid, D-lactic acid, glycolic acid, 3-hydroxybutyric acid, 4-hydroxybutyric acid, 3-hydroxyvaleric acid, 4-hydroxyvaleric acid and 6-hydroxycapric acid. Of those, especially preferred are polylactic acid resins, and more preferred are lactic acid homopolymers (polylactic acids). The polylactic acid resins are meant to include lactic acid homopolymers and copolyesters containing at least 70 % by weight of lactic acid monomer.

The plasticizer for use in the invention may be any and every one which, when added to biodegradable resins, acts to lower the glass transition point of the resins or to lower the stiffness thereof. For example, it includes ether-ester derivatives, glycerin derivatives, phthalic acid derivatives, glycolic acid derivatives, citric acid derivatives, adipic acid derivatives, and epoxy plasticizers.

Of those plasticizers, preferred are biodegradable ones as ensuring the biodegradability of the entire film containing it. Examples of such biodegradable plasticizers are triacetin, butyl esters of epoxidated linseed oil fatty acids, tributyl acetylcitrate, epoxidated soybean oil, and polyesters adipic acid with 1,3-butylene glycolic acid. In particular, the plasticizers listed in the Positive List by the Food Sanitation Association of Japan (JHPA-PL) such as polyolefins, as well as those admitted by the US FDA are especially preferred for use herein when the film of the invention is for food wrapping films.

The amount of the plasticizer to be added to the film of the invention may be such that the plasticizer added thereto is enough to soften the biodegradable resin constituting the film. Preferably, for example, the type and the amount of the plasticizer to be added are so controlled that the loop stiffness of the film standardized to have a thickness of 10 $\mu$m may be at most 300 $\mu$N/cm, more preferably at most 200 $\mu$N/cm, as the film in that condition can easily follow the shape of the substance to be wrapped with it. For wrapping films, it is even more desirable that the loop stiffness of the film standardized to have a thickness of 10 $\mu$m falls between 50 and 150 $\mu$N/cm, as they are easy to handle in practical use. If the loop stiffness of the film standardized to have a thickness of 10 $\mu$m is larger than 300 $\mu$N/cm, the film could not be well softened to a desired degree, and is therefore often not easy to use for wrapping films. The range of the amount of the plasticizer to be added to the film varies, depending on the type of the plasticizer and also on the type of the biodegradable resin to form the film, but falls between 5 and 50 % by weight. If the amount of the plasticizer added is smaller than 5 % by weight, the film containing it could not be softened enough; but if larger than 50 % by weight, too much plasticizer will bleed out from the film and will cause a problem of process trouble. More preferably, the plasticizer content of the film falls between 5 and 30 % by weight.

The plasticizer-containing, biodegradable film of the invention may be a mono-layered film or a multi-layered film, and the both surfaces of the film are coated with at least one thin layer as above to give the intended, biodegradable oriented film of the invention.

Optionally, at least one thin layer of the biodegradable oriented film of the invention may contain an adhesive to thereby make the film adhesive in some degree. The film of the type is favorable for wrapping films.

The adhesive may be any and every substance that is sticky in some degree. For example, it includes fatty acid esters, aliphatic hydrocarbon resins, terpeneresins, coumarone-indene resins, aromatic hydrocarbon resins, and rosin resins. The fatty acid esters are, for example, esters of polyalcohols such as glycerin, sorbitol, pentaerythritol, propylene glycol, polyethylene glycol or polypropylene glycol, with higher fatty acids such as oleic acid, linolic acid or lauric acid, concretely including monoglycerin monooleate, polyglycerin oleate, diglycerin stearate, glycerin diricinoleate, glycerin acetylricinoleate, propylene glycol oleate, propylene glycol laurate, pentaerythritol oleate, polyethylene glycol oleate, sorbitan oleate, sorbitan laurate, polyethylene glycol sorbitan laurate, sucrose monostearate, sucrose palmitate, sucrose oleate, sucrose laurate, sucrose behenate, sucrose erucate, and their mixtures.

The amount of the adhesive to be added preferably falls between 0.5 and 15 % by weight of the thin layer that contains the adhesive. Also preferably, the adhesive to be used herein is biodegradable. For the biodegradable, for example, preferred are terpene resins, rosin resins, fatty acid esters, and aliphatic hydrocarbon resins.

The thin layer to coat the film of the invention may optionally contain any other resin of, for example, epoxy resins, silicone resins, urea resins and phenolic resins, not interfering with the effect of the invention.

Also optionally, the thin layer may contain any other additive of, for example, antioxidant, heat stabilizer, weather stabilizer, UV absorbent, lubricant, pigment, dye, organic or inorganic fine particles, filler, antistatic agent, crosslinking agent and nucleating agent, not interfering with the effect of the invention.

If desired, particles may be added to the thin layer. The thin layer, if containing particles, is preferred, as improving the lubricity and the blocking resistance of the biodegradable oriented film coated with it.

The particles to be added to the thin layer are not specifically defined. For these, for example, usable are silica, colloidal silica, alumina, alumina sol, kaolin, talc, mica, calcium carbonate, and crosslinked polystyrene. Of those, especially preferred are silica (including silica aggregates) and colloidal silica, as they do not interfere with the transparency of the film. The mean particle size of the particles is not specifically defined, but preferably falls between 0.01 and 5 $\mu$m, more preferably between 0.05 and 3 $\mu$m, even more preferably between 0.08 and 2 $\mu$m. The blend ratio of the particles to all the resin in the adhesive layer is not also specifically defined, but preferably falls between 0.05 and 8 parts by weight, more preferably between 0.1 and 3 parts by weight in terms of the solid content thereby by weight.

Also preferably, a flaky inorganic mineral may be added to the thin layer that coats the film, as it enhances the function of the thin layer of preventing the plasticizer in the film from scattering away and/or bleeding out, and may be therefore effective for reducing the flexibility change of the film in heat treatment. The flaky inorganic mineral includes, for example, flakes of a phyllo-structured clay mineral such as montmorillonite and synthetic mica.

For the resin component, particles and additives constituting the thin layer, those listed in the Positive List by the Food Sanitation Association of Japan (JHPA-PL) such as polyolefins, as well as those admitted by the US FDA are especially preferred when the film of the invention is for food wrapping films.

The thickness of the biodegradable oriented film of the invention is not specifically defined, but preferably falls between 1 and 150 $\mu$m, more preferably between 5 and 100 $\mu$m, even more preferably between 5 and 20 $\mu$m.

As having the advantages of biodegradability, flexibility, heat resistance, especially long-lasting flexibility even under severe conditions, the biodegradable oriented film of the invention has many applications in various fields. Inparticular, the film is favorable for wrapping films, as well exhibiting its function.

The biodegradable oriented film of the invention keeps itself flexible for a long period of time, and, in particular, even under severe conditions at high temperatures, the film does not lose its flexibility. The biodegradable oriented film of the invention can be widely used in various fields, for example, for agricultural applications and wrapping and packaging applications, and this contributes towards reducing wastes in those fields.

Next described is a method for producing the biodegradable oriented film of the invention.

The biodegradable oriented film of the invention can be produced in any known method of producing oriented films, for example, through inflation, successive biaxial stretching or simultaneous biaxial stretching. In the inflation method, for example, at least one thin layer is previously laminated on the film before the film is extruded out; or after the film has been stretched, at least one thin layer is formed thereon in a separate line. In case where the biodegradable oriented film of the invention is produced in the successive biaxial stretching method or the simultaneous biaxial stretching method, for example, a predetermined amount of a plasticizer is first added to a biodegradable resin, then the resin is melt-extruded into a sheet through T-die in a known manner, and the sheet is brought into contact with a casting drum to be cooled and solidified thereon to prepare a non-stretched film. For adding the plasticizer to the biodegradable resin, for example, employable is a method of directly adding it to the resin, or a method of adding a metered amount of the plasticizer to a melt of the resin in a double-screw extruder. Of the two, preferred is the latter method of adding a metered amount of the plasticizer to a melt of the resin in a double-screw extruder.

The non-stretched film thus prepared according to the method as above is then continuously stretched at least in one direction, and thereafter at least one thin layer is formed on the both surfaces of the thus-stretched film; or after at least one thin layer has been formed on the both surfaces of the non-stretched film, the thus-coated film is stretched. Any of these methods is employable herein. For forming the thin layer on the both surfaces of the film, employable is any known method of, for example, extrusion lamination of resin to form the thin layer, or coating or dipping. The thin layer may be formed on the non-stretched or stretched film in the same line in which the film is prepared and stretched; or it may be formed on the stretched film in a separate line. Of the two methods, preferred is the former in-line method from the viewpoint of the production costs. Another advantage of the in-line method of forming the thin layer on the film before or after the film is successively stretched is that the latitude in selecting the thin layer in accordance with the use of the coated film is broadened and, in addition, the adhesiveness between the thin layer and the substrate film is well stabilized. Especially preferred in the invention is an in-line coating method that comprises first stretching the base film in the machine direction followed by applying an aqueous resin solution or emulsion to the thus-stretched film to form at least one thin layer on the both surfaces of the film, as the method is inexpensive and is easy to industrialize. More preferably, in the in-line coating method in which the base film is stretched in the machine direction and then coated with the thin layer, the coated film is then further stretched in the cross direction and then thermally fixed. In that manner, the adhesiveness between the coating thin layer and the base film is further enhanced and the toughness of the thin layer is increased.

Before coated with the thin layer, it is desirable that the non-stretched or stretched biodegradable film is subjected to corona-discharging treatment, as the treatment enhances the adhesiveness between the thin layer and the plasticizer-containing, biodegradable film, and improves the property of the thin layer formed on the both surfaces of the film.

EXAMPLES

The invention is described in more detail with reference to the following Examples in which is used polylactic acid, one typical example of biodegradable resins. However, the Examples given below are not intended to restrict the scope of the invention.

Measurement of Loop Stiffness of Film:

The loop stiffness (flexural strength index, M) of a standardized film having a thickness of 10 $\mu$m is measured as follows: The film is sampled to give a sample having a measuring-direction length of 15 cm and the cross width of 1 cm, and its flexural stress M1 ($\mu$N) is measured, using a loop stiffness tester (by Toyo Seiki Seisaku-sho) at 25C in 65% relative humidity. The loop length is 50 mm, and the pressing distance is 5 mm. From the thus-measured flexural stress M1 ($\mu$N) of the sample and the sample thickness t ($\mu$m), the loop stiffness M ($\mu$N/cm) of the sample film having a thickness of 10 $\mu$m is obtained according to the following formula:

$$M = M1 \times (10/t)^3 / (1.0).$$

From one film to be measured, ten samples are sampled randomly in different sites both in the machine direction and the cross direction, and measured in the same manner as above, and the data are averaged. The averaged value indicates the loop stiffness (flexural strength index, M) of the film standardized to have a thickness of 10 $\mu$m.

Measurement of Loop Stiffness of Film after heat treatment:

The film to be measured is heated in an oven at 130°C for 30 minutes, and sampled to give a sample having a measuring -direction length of 15 cm and the cross width of 1 cm. In the same manner as above, this is tested to determine the loop stiffness after heat treatment of the film standardized to have a thickness of 10 $\mu$m.

Determination of Loop Stiffness Change ($\Delta$R) after heat treatment:

The loop stiffness change, $\Delta$R, of the film tested is represented by the following formula, in which R25 indicates the loop stiffness before heat treatment of the film and R130 indicates the loop stiffness after heat treatment of the film:

$$\Delta R = [(R130 - R25)/R25] \times 100 \ (\%).$$

Hardness of Film for wrapping application, before and after heat treatment:

By the feel of it, the hardness (flexibility) of each film for wrapping applications is determined. After heat treatment in an oven at 130°C for 30 minutes, the film is also tested for its hardness (flexibility) in the same manner.

A: Excellent for wrapping applications, as it is not so hard and is well flexible.
B: Good for wrapping applications, as it is not so hard and is well flexible.
C: Not so good for wrapping applications, as it is somewhat hard and is not so flexible.
D: Unsuitable for wrapping applications, it is hard and is not flexible.

Films standardized to have a thickness of 10 $\mu$m satisfy the following relationship between the hand-touch test and the loop stiffness M.

A: $M \leq 200 \ \mu$N/cm.
B: $200 \ \mu$N/cm $< M \leq 300 \ \mu$N/cm.
C: $300 \ \mu$N/cm $< M \leq 420 \ \mu$N/cm.
D: $420 \ \mu$N/cm $< M$.

Biodegradability Evaluation:

According to ASTM D5338-92, each film is put into sludge and kept therein at 58°C to evaluate its biodegradability. The biodegradability of the film thus tested is represented by the following formula:

$$\text{Biodegradability} = (BOD - B)/TOD \times 100$$

.

wherein BOD indicates the biological oxygen demand (mg) of the (sludge + test substance);
B indicates the biological oxygen demand (mg) of the sludge blank;
TOD indicates the theoretical oxygen demand (mg) in complete oxidation of the test substance.

Biodegradable Resins:

L-polylactic acid A: 0.5 % by weight of calcium carbonate having a mean particle size of 1.0 $\mu$m is added to L-polylactic acid having a weight-average molecular weight of about 200,000 and having a melting point of 170°C. This is dried in a vacuum drier at 120°C for 5 hours to remove water from it.
L-polylactic acid B: L-polylactic acid having a weight-average molecular weight of about 200,000 and having a melting point of 170°C is dried in a vacuum drier at 120°C for 5 hours to remove water from it.

Plasticizers:

Plasticizer A: triacetin.
Plasticizer B: polyethylene glycol dibenzoate (molecular weight, 800).
Plasticizer C: tributyl acetylcitrate.

Coating compositions of aqueous dispersion:

Coating composition A: acrylic resin composition.

An acrylic resin emulsion having a mean particle size of 0.05 $\mu$m, obtained through emulsion polymerization of methyl methacrylate/butyl acrylate/acrylic acid (45/50/5 wt.%), is diluted with water to have a solid content of 3 % by weight. Coating composition B: vinyl resin composition.
This is an aqueous solution of 10 wt.% polyvinyl alcohol (having a mean degree of polymerization of 800 and a degree of saponification of 99.0 %).

Examples 1 and 2:

While the L-polylactic acid B was melted at 200°C in a double-screw extruder, a metered amount of the plasticizer C as in Table 1 was added thereto to form a polymer melt flow, which was then extruded out through the T-die at 200°C to give a film, and the film was cast onto a chill drum at 25°C to prepare a non-stretched film. Then, it was directly passed between heat rolls at 70°C to stretch 3-fold in the machine direction, and its both surfaces were then exposed to corona discharge. Next, the both surfaces of the stretched film were separately coated with the coating composition A in a mode of gravure-coating of such that the thickness of each thin layer formed on the both surfaces of the biaxially-stretched film could be as in Table 1. The corona discharge treatment ensured the formation of good thin layers on the both surfaces of the film. The thus-coated, monoaxially-stretched film was held by clips, introduced into a tenter, pre-heated therein at 60°C to partially remove water, then stretched 3.5-fold in the cross direction while still heated at 60°C, and finally heated at 140°C. The thin layer-coated, oriented polylactic acid film thus fabricated herein had a thickness of 10 $\mu$m. Its characteristic data are given in Table 1.

Examples 3 to 8:

While the L-polylactic acid A was melted at 200°C in a double-screw extruder, a metered amount of the plasticizer compound as in Table 1 was added thereto to form a polymer melt flow, which was then extruded out through the T-die at 200°C to give a film, and the film was cast onto a chill drum at 25°C to prepare a non-stretched film. Then, it was directly passed between heat rolls at 50°C to stretch 3-fold in the machine direction. Next, the both surfaces of the stretched film were separately coated with the coating composition A in a mode of gravure-coating of such that the thickness of each thin layer formed on the both surfaces of the biaxially-stretched film could be as in Table 1. The thus-coated, monoaxially-stretched film was held by clips, introduced into a tenter, pre-heated therein at 60°C to partially remove water, then stretched 5.0-fold in the cross direction while still heated at 60°C, and finally heated at 140°C. The thin layer-coated, oriented polylactic acid film thus fabricated herein had a thickness of 10 μm. Its characteristic data are given in Table 1.

Comparative Examples 1 to 3:

Flexible polylactic acid films of Comparative Examples 1, 2 and 3 were fabricated in the same manner as in Examples 3, 4 and 6, respectively. In these, however, the thin layer of acrylic resin was not formed. The characteristic data of the polylactic acid films are given in Table 2.

Comparative Example 4:

While the L-polylactic acid B was melted at 200°C in a double-screw extruder to form a polymer melt flow, which was then extruded out through the T-die at 200°C to give a film, and the film was cast onto a chill drum at 25°C to prepare a non-stretched film. Then, it was directly passed between heat rolls at 80°C to stretch 3-fold in the machine direction. The monoaxially-stretched film was held by clips, introduced into a tenter, pre-heated therein at 80°C then stretched 3.5-fold in the cross direction while still heated at 80°C, and finally heated at 140°C. The oriented polylactic acid film thus fabricated herein had a thickness of 10 μm. Its characteristic data are given in Table 2.

Reference Example 1:

An oriented polylactic acid film having a thickness of 10 μm was fabricated in the same manner as in Example 8. In this, however, the thickness of the thin layer of the coating composition B on the stretched film was 0.2 μm.

Table 1

| | Example 1 | Example 2 | Example 3 | Example 4 | Example 5 | Example 6 | Example 7 | Example 8 | Example 9 |
|---|---|---|---|---|---|---|---|---|---|
| Polymer | L-polylactic acid B | L-polylactic acid B | L-polylactic acid A | L-polylactic acid A | L-polylactic acid A | L-polylactic acid A | L-polylactic acid A | L-polylactic acid A | L-polylactic acid B |
| Plasticizer | C | C | A | A | A | A | B | B | B |
| Amount Added (wt.%) | 15 | 25 | 5 | 10 | 20 | 25 | 20 | 30 | 30 |
| Resin of Thin Layer | acrylic resin | acrylic resin | acrylic resin | acrylic resin | acrylic resin | acrylic resin | acrylic resin | acrylic resin | vinyl resin |
| Thickness of Thin Layer ($\mu$m) | 0.2 | 0.2 | 0.2 | 0.2 | 0.2 | 0.2 | 0.2 | 0.6 | 0.4 |
| Thickness of Film ($\mu$m) | 10 | 10 | 10 | 10 | 10 | 10 | 10 | 10 | 10 |
| Loop Stiffness ($\mu$N/cm) | 190 | 150 | 290 | 250 | 170 | 150 | 210 | 170 | 170 |
| Flexibility for Wrapping Films | A | A | B | B | A | A | B | A | A |
| $\Delta$R(%) | 3 | 6 | 2 | 4 | 6 | 7 | 19 | 12 | 11 |
| Flexibility after heat treatment | A | A | B | B | A | A | B | A | A |
| Loop Stiffness after heat treatment ($\mu$N/cm) | 195 | 160 | 295 | 260 | 180 | 160 | 250 | 190 | 190 |

Table 2

| | Comp. Example 1 | Comp. Example 2 | Comp. Example 3 | Comp. Example 4 | Ref. Example 1 |
|---|---|---|---|---|---|
| Polymer | L-polylactic acid A | L-polylactic acid A | L-polylactic acid A | L-polylactic acid B | L-polylactic acid A |
| Plasticizer | A | A | A | no | B |
| Amount Added (wt.%) | 5 | 10 | 25 | 0 | 30 |
| Resin of Thin Layer | no | no | no | no | acrylic resin |
| Thickness of Thin Layer ($\mu$m) | 0 | 0 | 0 | 0 | 0.2 |
| Thickness of Film ($\mu$m) | 10 | 10 | 10 | 10 | 10 |
| Loop Stiffness ($\mu$N/cm) | 290 | 230 | 140 | 450 | 160 |
| Flexibility for Wrapping Films | B | B | A | D | A |
| $\Delta$R(%) | 55 | 100 | 220 | - | 37 |
| Flexibility after heat treatment | D | D | D | D | B |
| Loop Stiffness after heat treatment ($\mu$N/cm) | 450 | 460 | 450 | - | 220 |

When Examples 1 to 8 are compared with Comparative Example 4, it is obvious that the plasticizer added to polylactic acid softens the films, and the plasticizer-containing films are flexible and favorable for wrapping films. In this connection, the loop stiffness of wrapping films is preferably not larger than 300 $\mu$N/cm. With the increase in the amount of the plasticizer added thereto, the films are more flexible. The plasticizers A, B and C tested herein are all effective for softening the films, but their effect differs in some degree.

As in Examples 1 to 8 in which the base film is coated with a thin acrylic resin layer, it is understood that $\Delta$R of the coated films is kept small after heat treatment, or that is, the coated films well keep themselves flexible even at high temperatures. On the other hand, it is also understood that $\Delta$R of the coated films varies depending on the plasticizer added thereto, even when the thickness of the thin layer that coats the films is the same. The comparison between Reference Example 1 and Example 8 indicates that the loop stiffness change of the coated films is reduced by increasing the thickness of the thin layer that coats the films. On the other hand, in case where the thin layer is not formed on the base film, the plasticizer in the base film scatters away and/or bleeds out when heated, and the non-coated film could not keep itself flexible, and is useless for wrapping films. This is obvious from the comparison between Example 3 and Comparative Example 1; between Example 4 and Comparative Example 2; and between Example 6 and Comparative Example 3.

Biodegradability Evaluation:

Tested for biodegradability in the manner as above, the film of Example 6 almost completely biodegraded. Its biodegradability was 88 %.

Comparative Example 5:

While the L-polylactic acid A was melted at 200°C in a double-screw extruder, a metered amount, 25 % by weight of the plasticizer A (triacetin) was added thereto to form a polymer melt flow, which was then extruded out through the T-die at 200°C to give a film, and the film was cast onto a chill drum at 25°C to prepare a non-stretched film having a thickness of 90 $\mu$m. Not stretched, this was coated with the coating composition A, like in Example 3, in a separate line to form a thin layer having a thickness of 0.2 $\mu$m on its both surfaces.

Just after coated, the film was soft and flexible. However, after kept in an oven at 50°C for 10 days, the film became cloudy and its appearance became extremely bad. When, the non-stretched film was heated at 130°C for 30 minutes, it became whitish, and its surface was roughened. In addition, it became extremely brittle and lost flexibility. After thus heated, $\Delta$R of the film was 135 %.

Example 9:

A stretched polylactic acid film having a thickness of 10 $\mu$m was fabricated in the same manner as in Example 2. In this, however, the plasticizer B was used in place of the plasticizer A, and the thickness of the thin layer formed was 0.4 $\mu$m. The characteristic data of the film are given in Table 1.

As in this Example 9 in which the base film is coated with a thin vinyl resin layer, it is understood that $\Delta$R of the coated film is kept small after heat treatment, or that is, the coated film well keeps itself flexible even at high temperatures.

Example 10:

A stretched film was fabricated in the same manner as in Example 4. In this, however, an adhesive, diglycerin stearate was added to the coating composition A to form the thin layer on one surface of the base film. The amount of the adhesive added was 3 % by weight in terms of its solid content. The film thus fabricated herein was well flexible and sticky in some degree, and is therefore favorable for wrapping films.

Example 11:

A stretched film was fabricated in the same manner as in Example 1. In this, however, an adhesive, sorbitan oleate was added to the coating composition A to form the thin layer on one surface of the base film. The amount of the adhesive added was 2 % by weight in terms of its solid content. The film thus fabricated herein was well flexible and sticky in some degree, and is therefore favorable for wrapping films.

**Claims**

1. A biodegradable oriented film of a biodegradable resin containing 5 to 50% by weight of plasticizer, of which the both surfaces are coated with at least one thin layer and of which the loop stiffness change ($\Delta$R) after heat treatment at 130°C for 30 minutes is at most 20 %, and wherein the essential constituent component of the thin layer is selected from the group of polyester resins, acrylic resins, polyurethane resins, vinyl resins, epoxy resins, amide resins and mixtures thereof, and
wherein the thickness of the thin layer is at most 1 $\mu$m.

2. The biodegradable oriented film as claimed in claim 1, which, when standardized to have a thickness of 10 $\mu$m, has a loop stiffness of at most 300 $\mu$N/cm.

3. The biodegradable oriented film as claimed in claim 1, of which the loop stiffness change ($\Delta$R) after heat treatment at 130°C for 30 minutes is at most 10 %.

4. The biodegradable oriented film as claimed in claim 1, wherein the plasticizer is biodegradable.

5. The biodegradable oriented film as claimed in claim 1, wherein the thin layer is made of at least one resin selected from polyester resins, acrylic resins, and vinyl resins.

6. The biodegradable oriented film as claimed in claim 1, which contains an adhesive in at least one thin layer.

7. The biodegradable oriented film as claimed in claim 1, wherein the biodegradable resin is a polylactic acid resin.

8. A wrapping film of the biodegradable oriented film of any of claims 1 to 7.

**Patentansprüche**

1. Biologisch abbaubare orientierte Folie aus einem biologisch abbaubaren Harz, das 5 bis 50 Gew.-% Weichmacher enthält, bei der beide Oberflächen mit zumindest einer dünnen Schicht überzogen sind, und bei der die Änderung der Schlaufensteifigkeit (ΔR) nach einer dreißigminütigen Wärmebehandlung bei 130°C höchstens 20 % beträgt und wobei die wesentliche Bestandteilkomponente der dünnen Schicht aus der Gruppe von Polyesterharzen, Acrylharzen, Polyurethanharzen, Vinylharzen, Epoxidharzen, Amidharzen und Gemischen davon ausgewählt ist, und wobei die Dicke der dünnen Schicht höchstens 1 μm beträgt.

2. Biologisch abbaubare orientierte Folie nach Anspruch 1, die, wenn sie bei einer Dicke von 10 μm standardisiert ist, eine Schlaufensteifigkeit von höchstens 300 μN/cm aufweist.

3. Biologisch abbaubare orientierte Folie nach Anspruch 1, bei der die Änderung der Schlaufensteifigkeit (ΔR) nach einer dreißigminütigen Wärmebehandlung bei 130°C höchstens 10 % beträgt.

4. Biologisch abbaubare orientierte Folie nach Anspruch 1, wobei der Weichmacher biologisch abbaubar ist.

5. Biologisch abbaubare orientierte Folie nach Anspruch 1, wobei die dünne Schicht aus zumindest einem Harz hergestellt ist, das aus Polyesterharzen, Acrylharzen und Vinylharzen ausgewählt ist.

6. Biologisch abbaubare orientierte Folie nach Anspruch 1, die in zumindest einer dünnen Schicht ein Klebemittel enthält.

7. Biologisch abbaubare orientierte Folie nach Anspruch 1, wobei das biologisch abbaubare Harz ein Polymilchsäureharz ist.

8. Verpackungsfolie aus der biologisch abbaubaren orientierten Folie nach einem der Ansprüche 1 bis 7.

**Revendications**

1. Film orienté biodégradable d'une résine biodégradable contenant 5 à 50% en poids de plastifiant, dont les deux surfaces sont revêtues d'au moins une couche mince et dont la variation de la rigidité en boucle (ΔR) après traitement thermique à 130°C pendant 30 minutes est au maximum de 20%, et dans lequel le composant constitutif essentiel de la couche mince est choisi dans le groupe des résines de polyester, des résines acryliques, des résines de polyuréthane, des résines vinyliques, des résines époxy, des résines d'amide et leurs mélanges, et dans lequel l'épaisseur de la couche mince est au maximum de 1 μm.

2. Film orienté biodégradable selon la revendication 1, qui, lorsqu'il est normalisé pour avoir une épaisseur de 10 μm, possède une rigidité en boucle d'au maximum 300 μN/cm.

3. Film orienté biodégradable selon la revendication 1, dont la variation de la rigidité en boucle (ΔR) après traitement thermique à 130°C pendant 30 minutes est au maximum de 10%.

4. Film orienté biodégradable selon la revendication 1, dans lequel le plastifiant est biodégradable.

5. Film orienté biodégradable selon la revendication 1, dans lequel la couche mince est faite d'au moins une résine choisie parmi les résines de polyester, les résines acryliques et les résines vinyliques.

6. Film orienté biodégradable selon la revendication 1, qui contient un adhésif dans au moins une couche mince.

7. Film orienté biodégradable selon la revendication 1, dans lequel la résine biodégradable est une résine d'acide polylactique.

8. Film d'emballage du film orienté biodégradable selon l'une quelconque des revendications 1 à 7.